# FASCICULE DE BREVET EUROPEEN

(11) **EP 1 675 898 B1**
(45) Date de publication et mention de la délivrance du brevet: **11.07.2007**
(21) Numéro de dépôt: 04791479.1
(22) Date de dépôt: 07.10.2004
(51) Int. Cl.: C08K 5/372, C08K 5/21

(54) **AGENT DE VULCANISATION UTILISABLE POUR LES CAOUTCHOUCS DE TYPE EPDM**
HÄRTER, DER FÜR EPDM-KAUTSCHUKE GEEIGNET IST
CURING AGENT WHICH IS SUITABLE FOR EPDM-TYPE RUBBERS

(30) Priorité: 15.10.2003 FR 0312022
(43) Date de publication de la demande: 05.07.2006
(73) Titulaire: Arkema France, 92800 Puteaux (FR)
(72) Inventeur: AUBERT, Thierry, F-64000 Pau (FR)
(74) Mandataire: Treuil, Claude
(86) Numéro de dépôt international: PCT/FR2004/002526
(87) Numéro de publication internationale: WO 2005/037910

(56) Documents cités:
- DD-A- 247 016
- US-A- 5 326 828
- GRAF, H.-J.: "Praxisrelevante Strategien zur Vermeidung gefährlicher N-Nitrosamine bei der Vulkanisation von Elastomeren" KAUTSCHUK GUMMI KUNSTSTOFFE, vol. 46, no. 6, 1993, pages 486-491, XP0001181230
- LAFFITTE, J.A.; LUGEZ, P.: "Nouvel agent de couplage silice-SBR" CAOUTCHOUCS AND PLASTIQUES, vol. 816, 1 octobre 2003 (2003-10-01), pages 48-53, XP001181167

## Description

La présente invention a pour objet un nouvel agent de vulcanisation à base de polysulfures de poly(alkyl phénol) utilisable dans le domaine des caoutchoucs de type EPDM. Elle concerne également un procédé de vulcanisation le mettant en oeuvre qui ne présente pas de risque relatif aux nitrosamines.

Les polysulfures de poly(alkyl phénol), connus sous la dénomination de Vultac®, sont des agents de vulcanisation largement utilisés dans l'industrie du caoutchouc comme donneurs de soufre. On entend par cette dernière expression désigner, dans le domaine des caoutchoucs, un composé (ou mélange de composés chimiques) qui est capable de libérer du soufre par chauffage à la température de vulcanisation, afin de réticuler les caoutchoucs ou élastomères, qui contiennent des doubles liaisons dans leur chaîne principale ou latérale. Les polysulfures de poly(alkyl phénol) contribuent en effet tant au bon déroulement de la réaction de vulcanisation qu'aux propriétés mécaniques des articles vulcanisés fabriqués à partir du caoutchouc naturel, des caoutchoucs synthétiques de type SBR (Styrène Butadiène Rubber) ou Chlorobutyle ou de leurs mélanges. Un de leurs avantages les plus appréciés est qu'ils ne possèdent pas d'azote ou de groupement amine, et ne peuvent pas par conséquent générer de nitrosamines ou contribuer à leur formation.

Dans le domaine du caoutchouc, la présence de nitrosamines est en effet perçue depuis longtemps comme une menace sérieuse pour la santé aussi bien des personnes qui travaillent dans les unités de fabrication que pour les utilisateurs ou les consommateurs qui sont en contact avec les articles vulcanisés après mise en forme. C'est pourquoi l'industrie du caoutchouc s'efforce continuellement d'éliminer ou de limiter les émissions de nitrosamines et les produits chimiques qui sont susceptibles d'en générer.

Les caoutchoucs de type EPDM (Ethylène Propylène Diène Monomère) sont obtenus par copolymérisation de l'éthylène, du propylène et d'un monomère diénique. Ils relèvent du domaine des caoutchoucs industriels, et sont particulièrement utilisés, après vulcanisation, dans la fabrication des profilés pour l'automobile ou pour le bâtiment. Ces derniers sont largement utilisés pour leurs propriétés mécaniques, leurs qualités d'étanchéité et leur tenue au vieillissement. On peut citer par exemple dans le domaine de l'automobile les profilés qui assurent l'étanchéité entre la vitre et la partie métallique de la portière, et dans le domaine du bâtiment les joints de vitrage.

L'incorporation des polysulfures de poly(alkyl phénol) durant la vulcanisation des caoutchoucs de type EPDM a été envisagée. Elle se heurte toutefois à un effet indésirable concernant la cinétique de vulcanisation. Elle entraîne en effet une augmentation notable de la durée de la réaction de vulcanisation. Or cette durée est un paramètre critique qui conditionne la productivité de la fabrication des articles en caoutchoucs de type EPDM pour les industriels de ce secteur.

Seuls quelques agents de vulcanisation donneurs de soufre ne présentant pas de risque relatif aux nitrosamines ont été proposés pour la réticulation des élastomères de type EPDM. On peut ainsi citer des composés appartenant à la famille des dithiolactames, tel le dithiodicaprolactame, à la famille des polythiophosphates, tels le bis(O,O-2-ethylhexylthiophosphoryl polysulfure ou encore à la famille des xanthates polysulfures.

Toutefois il est toujours souhaitable d'élargir la panoplie des agents de vulcanisation donneurs de soufre qui sont proposés dans le domaine de la mise au point des caoutchoucs industriels (notamment des EPDM), afin que les spécialistes de ce domaine puissent réaliser les formulations complexes qui permettent d'atteindre l'optimisation des propriétés mécaniques requises pour les vulcanisats, tout en obtenant une durée de vulcanisation compatible avec les impératifs de productivité des unités de fabrication.

Il a été trouvé à présent un nouvel agent de vulcanisation donneur de soufre à base de polysulfures de poly(alkyl phénol) qui ne présente pas de risque relativement à la formation de nitrosamines, et qui remédie de plus à l'inconvénient mentionné ci-dessus relatif à l'allongement indésirable de la durée de vulcanisation des compositions vulcanisables à base d'EPDM.

La présente invention a ainsi pour objet un agent de vulcanisation donneur de soufre comprenant la combinaison de :
- 10 à 90 % d'un produit (I) consistant en un mélange de polysulfures de poly(alkyl phénol) de formule : 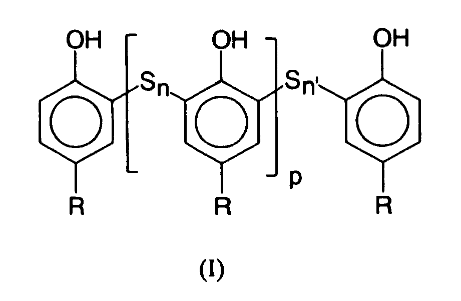 dans laquelle :
   - R est un radical alkyle comprenant de 1 à 20 atomes de carbone,
   - n et n' sont deux entiers, identiques ou différents, chacun étant supérieur ou égal à 1 et inférieur ou égal à 8,
   - p est un entier compris entre 0 et 50, et
- de 10 à 90% d'un composé de formule (II)

R'NHCONHR" (II)

dans laquelle R' et R", identiques ou différents, représentent chacun un atome d'hydrogène ou un radical alkyle ou aryle comprenant de 1 à 20 atomes de carbone.

Les pourcentages indiqués ci-dessus et dans l'ensemble du présent texte sont, en l'absence d'indications contraires, des pourcentages en poids.

Il a en effet été constaté que l'incorporation dans une composition vulcanisable à base d'élastomère EPDM du composé (II) permet à la combinaison selon l'invention de présenter une durée de vulcanisation qui est, de manière surprenante, considérablement diminuée par rapport à celle résultant de l'incorporation du produit (I) seul.

On préfère utiliser dans la combinaison selon l'invention un produit de formule (I) dans laquelle R est un radical alkyle comprenant de 4 à 10 atomes de carbone, n et n' sont chacun supérieur ou égal à 1 et inférieur ou égal à 4, et p est un entier compris entre 0 et 20.

Selon une autre variante préférée, on utilise un composé de formule (II) dans laquelle R' et R" représentent un radical alkyle comprenant de 1 à 3 atomes de carbone.

Selon un mode de réalisation plus particulièrement préféré, les radicaux R' et R" de la formule (II) représentent un atome d'hydrogène, le composé II étant alors l'urée.

Les polysulfures de poly(alkyl phénol) de formule (I) sont connus depuis longtemps, et sont notamment commercialisés par la Société ATOFINA sous la dénomination VULTAC®. Ils peuvent être préparés par réaction du monochlorure ou du dichlorure de soufre sur un alkyl phénol , à une température comprise entre 100 et 200 °C, selon la réaction suivante :

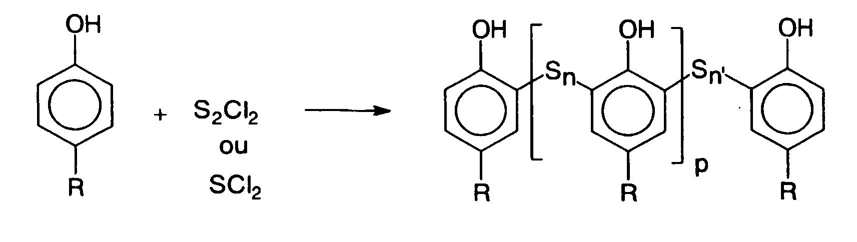

On peut citer comme référence de fabrication de ces produits le brevet US 2 422 156 ou US 3 968 062.

Selon une autre variante préférée de l'invention, on utilise un mélange de composés de formule (I) dans laquelle R est un radical alkyle comprenant au moins un carbone tertiaire par lequel R est relié au noyau aromatique.

Selon une variante davantage préférée, R est un radical tertio-butyle ou tertio-pentyle.

On utilise encore plus préférentiellement comme mélange de composés de formule (I) un mélange dans lequel la valeur moyenne de n et de n'est d'environ 2, et la valeur moyenne de p est d'environ 5. Ces valeurs moyennes sont calculées par l'homme du métier à partir de données RMN du proton et par dosage pondéral du soufre.

La combinaison du produit (I) et du composé (II) est préparée par simple mélange physique intime de (I) et (II) à l'état pulvérulent.

La présente invention concerne également un procédé de vulcanisation d'une composition élastomérique de type EPDM ne présentant pas de risque relatif aux nitrosamines, comprenant l'incorporation dans la composition élastomérique vulcanisable d'une quantité efficace de l'agent de vulcanisation selon l'invention.

On entend désigner par composition élastomérique de type EPDM l'utilisation comme élastomère d'un terpolymère comprenant des motifs dérivés de l'éthylène, du propylène et d'un monomère diénique. Ce dernier peut être :
- un diène conjugué comme l'isoprène ou le butadiène 1,3 ;
- un diène non conjugué comprenant de 5 à 25 atomes de carbone, comme le 1,4-pentadiène, le 1,4-hexadiène, le 1,5-hexadiène, le 2,5-diméthyl-1,5-hexadiène, ou le 1,4-octadiène ;
- un diène cyclique comme le cyclopentadiène, le cyclohexadiène, le cyclooctadiène ou le dicyclopentadiène, ; ou encore
- un alkylidènenorbornène ou un alkénylnorbornène comme le 5-éthylidène-2-norbornène, 5-butylidène-2-norbornène, 2-méthyl-allyl-5-norbornène, 2-isopropényl-5-norbornène.

Ces terpolymères comprennent en général de 30 à 80 % en poids de motifs dérivés de l'éthylène, et une teneur en motifs dérivés du propylène correspondant à un rapport en poids : motifs dérivés de l'éthylène/motifs dérivés du propylène compris entre 0,5 et 3. La teneur en monomère diènique est généralement comprise entre 0,5 et 12 % en poids.

La composition élastomérique vulcanisable mise en oeuvre dans le procédé selon l'invention peut incorporer comme élastomère un ou plusieurs terpolymères tels que définis précédemment.

Un terpolymère d'éthylène, de propylène et d'éthylidène norbornène est plus spécialement préféré.

Outre l'élastomère de type EPDM, la composition vulcanisable mise en oeuvre dans le procédé selon l'invention comprend également un ou plusieurs accélérateurs de vulcanisation ne présentant pas de risque relatif aux nitrosamines. On peut citer notamment les composés appartenant à la famille des dithiophosphates métalliques, tels les dialkyl dithiophosphates de zinc, à la famille des sulfénamides dérivés du benzothiazole, tel le N-cyclohexyl-2-benzothiazolesulfénamide et à la famille des dithiocarbamates tel le dibenzyl dithiocarbamate de Zinc. Ce dernier est un dérivé de la dibenzylamine, dont la nitrosamine correspondante n'est pas volatile et présente donc un risque limité ; il est de ce fait classé comme non dangereux.

La composition vulcanisable mise en oeuvre comprend enfin les additifs usuels tels que charge renforçante, comme le noir de carbone, de l'huile paraffinique, et des activateurs de vulcanisation comme l'oxyde de zinc ou la stéarine.

La quantité d'agent de vulcanisation selon l'invention qui est incorporée dans la composition vulcanisable décrite précédemment varie selon la nature et la quantité des autres additifs et peut être déterminée commodément par l'homme du métier au moyen d'essais systématiques. En général une dose comprise entre 0,4 et 6 parties en poids pour cent parties en poids d'élastomère, de préférence entre 0,8 et 3 est appropriée.

Après incorporation dans la composition vulcanisable des additifs précédemment décrits ainsi que du soufre, la composition vulcanisable est, après mise en forme (par exemple par moulage ou extrusion), vulcanisée par tout moyen connu de l'homme du métier, tel que par simple chauffage.

La présente invention est illustrée à titre non limitatif par les exemples suivants.

Dans ces exemples on utilise comme produit (I) un mélange de composés de formule (I) dans laquelle R est un radical tertio-butyle, la valeur moyenne de n et de n' est d'environ 2, et la valeur moyenne de p est d'environ 5. Ce produit est disponible sous la dénomination de Vultac TB7® auprès de la société ATOFINA. Le produit (II) utilisé est l'urée.

### Exemple 1 : Agent de vulcanisation comprenant 80 % de Vultac TB7® et 20 % d'urée:

L'agent de vulcanisation est préparé par simple mélange du produit (I) et du composé de formule (II) à l'état pulvérulent.

### Exemple 2 : Composition vulcanisable comprenant l'agent de vulcanisation de l'exemple 1 et un terpolymère d'éthylène, de propylène et d'éthylidène norbornène :

### 2.1. Préparation de la composition :

On prépare, dans une première étape, un mélange maître comprenant l'élastomère, la charge renforçante et des additifs non soufrés. On procède par simple mélange à température ambiante dans un mélangeur interne de 2 litres de type Banbury tournant à 25 tours/minute.

La teneur des différents ingrédients utilisés pour préparer ce mélange maître est indiquée dans le tableau (A) ci-après. Cette teneur est exprimée en grammes.

**Tableau (A)**

| **Ingrédient** | **Caractéristique** | **Teneur (g)** |
|---|---|---|
| Terpolymère éthylène (64%), propylène (27,5%), éthylidène norbornène (8,5%) | (1) | 60 |
| Terpolymère éthylène (67%), propylène (28,5%), éthylidène norbornène (4,5%) | (2) | 70 |
| Noir de carbone | (3) | 80 |
| Craie | (4) | 70 |
| Huile paraffinique | (5) | 50 |
| Oxyde de zinc | (6) | 5 |
| Acide stéarique | (7) | 1 |
| TOTAL | | 336 |

Les caractéristiques des ingrédients utilisés sont les suivantes :
(1) terpolymère vendu sous la dénomination commerciale EPDM Keltan® 509*100 par la société DSM Elastomers.
(2) terpolymère vendu sous la dénomination commerciale EPDM Keltan® 578 par la société DSM Elastomers.
(3) vendu sous la désignation commerciale N660 par la société CABOT
(4) charge non renforçante
(5) vendue sous la désignation commerciale Flexon 876 par la société ESSO
(6) et (7) activateurs de vulcanisation

Dans une deuxième étape, le mélange maître du tableau (A) est transféré dans un mélangeur à cylindres et porté à une température de 45°C. On prépare alors la composition vulcanisable par incorporation successive du soufre, puis des ingrédients indiqués dans le tableau (B) ci-dessous :

**Tableau (B)**

| **Ingrédient** | **Caractéristique** | **Teneur (en g)** |
|---|---|---|
| Mélange maître du tableau (A) | | 336 |
| Mélange à 80% de soufre | (8) | 0,5 |
| Mélange à 80% de 2-mercaptobenzothiazole | (9) | 1,5 |
| Mélange à 70% de dibenzyl dithiocarbamate de zinc | (10) | 3,15 |
| Vultac® TB7 / urée : 80/20 % (agent de vulcanisation de l'exemple 1) | | 1,5 |

Les caractéristiques des ingrédients utilisés sont les suivantes :
(8) Produit vendu par la société MLPC sous la dénomination de S 80 GA F500, contenant 80% de soufre et environ 20% d'élastomère.
(9) Accélérateur de vulcanisation ne générant pas de nitrosamine vendu par la société MLPC sous la dénomination commerciale de MBT 80 GA F500 U contenant 80% de 2-mercaptobenzothiazole et environ 20% d'élastomère
(10) Accélérateur de vulcanisation non toxique car générant une nitrosamine non volatile vendu par la société MLPC sous la dénomination commerciale de ZBEC 70 GA F100, contenant 70% de dibenzyl dithiocarbamate de zinc et environ 30% d'élastomère

### 2.2. Détermination par rhéométrie du t90 :

Le t90 est le temps, exprimé en minutes, correspondant à 90% de la vulcanisation complète. Il représente la durée de la réaction de vulcanisation.

Ce temps est déterminé à l'aide d'un rhéomètre à disque oscillant conformément à la norme française NF T 43-015. Selon cette norme, une éprouvette de caoutchouc est ainsi comprimée dans une chambre étanche et maintenue à une température constante (fixée à 180°C dans les conditions de test). Un disque biconique est noyé à l'intérieur de l'échantillon et oscille avec une faible amplitude. Cette action exerce une force de cisaillement sur l'éprouvette et le couple nécessaire à l'oscillation du disque dépend de la rigidité (module de cisaillement) du caoutchouc, ce dernier augmentant lorsque la réaction de vulcanisation commence. L'évolution du couple en fonction du temps est alors enregistrée en fonction du temps.

Le t90 est ainsi déterminé par le temps correspondant à 90% du couple obtenu le plus élevé en fin d'enregistrement qui correspond à l'achèvement de la vulcanisation.

Le résultat du t90 concernant la composition vulcanisable est indiqué dans le tableau (C) ci-après.

### Exemple 3 (comparatif) :

On répète l'exemple 2 en incorporant à la place de 1,5 g de la combinaison Vultac® TB7/urée, 1,2 g de Vultac® TB7.

Le résultat de t90 est indiqué dans le tableau (C).

### Exemple 4 (comparatif) :

On répète l'exemple 2 en incorporant à la place de 1,5 g de la combinaison Vultac® TB7/urée, 0,3 g d'urée.

Le résultat de t90 est indiqué dans le tableau (C) ci-dessous.

**Tableau (C)**

| **Composition vulcanisable** | **Exemple 2 (Vultac® TB7/urée : 80/20 %)** | **Exemple 3 (comparatif) (Vultac® TB7)** | **Exemple 4 (comparatif) (urée)** |
|---|---|---|---|
| t90 (minutes) | 3,83 | 6,02 | 5,15 |

Ce tableau fait apparaître que les valeurs de t90 de la composition vulcanisable correspondant au Vultac® TB7 et à l'urée sont inacceptables pour les caoutchoutiers. En revanche, le t90 est considérablement abaissé grâce à la combinaison Vultac® TB7 / urée. La durée de vulcanisation de l'exemple 2 est ainsi compatible avec les contraintes de productivité requises dans les unités de fabrication des articles vulcanisés à base d'EPDM.

### Exemple 5 : Agent de vulcanisation comprenant 50 % de Vultac® TB7 et 50 % d'urée :

Cet agent est préparé en répétant le mode de préparation de l'exemple 1.

### Exemple 6 : Composition vulcanisable comprenant l'agent de vulcanisation de l'exemple 5 et un terpolymère d'éthylène, de propylène et d'éthylidène norbornène :

### 6.1. Préparation de la composition :

On procède comme à l'exemple 2 pour préparer 286 g d'un mélange maître dont la teneur en ingrédients est indiquée en grammes dans le tableau (D) ci-après :

**Tableau (D)**

| **Ingrédient** | **Caractéristique** | **Teneur (g)** |
|---|---|---|
| Terpolymère éthylène (48,59%), propylène (42,41%), éthylidène norbornène (9%) | (11) | 100 |
| Oxyde de zinc | (12) | 5 |
| Acide stéarique | (13) | 1 |
| Noir de carbone | (14) | 70 |
| Noir de carbone | (15) | 40 |
| Huile paraffinique | (5) | 70 |
| TOTAL | | 286 |

Les caractéristiques des ingrédients utilisés sont les suivantes :
(11) terpolymère vendu sous la dénomination commerciale EPDM Keltan® 4903Z par la société DSM Elastomers.
(12) et (13) activateurs de vulcanisation
(14) vendu sous la désignation commerciale N550 par la société CABOT
(15) vendu sous la désignation commerciale N770 par la société CABOT

Comme à l'exemple 2, on prépare à partir de ce mélange maître les compositions vulcanisables constituées des ingrédients indiqués dans le tableau (E) ci-dessous :

**Tableau (E)**

| **Ingrédient** | **Caractéristique** | **Teneur (g)** |
|---|---|---|
| Mélange maître du tableau (C) | | 286 |
| Mélange à 80% de soufre | (8) | 0,5 |
| Mélange à 80% de 2-mercaptobenzothiazole | (9) | 1,5 |
| Mélange à 80% de N-cyclohexyl-2-benzothiazylsulfenamide | (16) | 1 |
| Mélange à 50% de dialkyldithiophosphate de zinc | (17) | 4,4 |
| Vultac® TB7 / urée : 50/50 (agent de vulcanisation de l'exemple 5) | | 1,5 |

avec :
(16) Accélérateur de vulcanisation ne générant pas de nitrosamine vendu par la société MLPC sous la dénomination commerciale de CBS 80 GA F500 U, contenant 80% de N-cyclohexyl-2-benzothiazyl-sulfenamide et environ 20% d'élastomère
(17) Accélérateur de vulcanisation ne générant pas de nitrosamine vendu par la société MLPC sous la dénomination commerciale de ZDTP 50 GA F500, contenant 50% de dialkyldithiophosphate de zinc et environ 50% d'élastomère.

### 6.2. Mesure du t90 :

En procédant comme à l'exemple 2, on obtient le résultat indiqué dans le tableau (F) ci-après.

### Exemple 7 : Composition vulcanisable comprenant l'agent de vulcanisation de l'exemple 1 et un terpolymère d'éthylène, de propylène et d'éthylidène norbornène :

On répète l'exemple 6 en incorporant en lieu et place de l'agent de vulcanisation de l'exemple 5 celui de l'exemple 1.

On obtient le t90 indiqué dans le tableau (F) ci-dessous :

**Tableau (F)**

| **Composition vulcanisable** | **Exemple 6 (Vultac® TB7/urée : 50/50 %)** | **Exemple 7 (Vultac**® **TB7/urée : 80/20 %)** |
|---|---|---|
| t90 (en minute et seconde) | 1min 11s | 1min 39s |

La combinaison Vultac® TB7/urée : 50/50 % conduit à une durée de vulcanisation qui est avantageusement encore abaissée par rapport à celle obtenue avec la combinaison Vultac® TB7/urée : 80/20 %.

## Revendications

1. Agent de vulcanisation donneur de soufre comprenant la combinaison de :
- 10 à 90 % d'un produit (I) consistant en un mélange de polysulfures de poly(alkyl phénol) de formule : 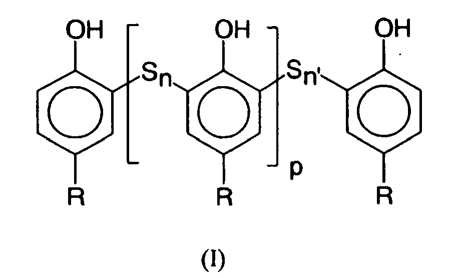 dans laquelle :
- R est un radical alkyle comprenant de 1 à 20 atomes de carbone,
- n et n' sont deux entiers, identiques ou différents, chacun étant supérieur ou égal à 1 et inférieur ou égal à 8,
- p est un entier compris entre 0 et 50, et
- de 10 à 90% d'un composé de formule (II)
R'NHCONHR" (II)
dans laquelle R' et R", identiques ou différents, représentent chacun un atome d'hydrogène ou un radical alkyle ou aryle comprenant de 1 à 20 atomes de carbone.

2. Agent de vulcanisation selon la revendication 1, **caractérisé en ce que** l'on utilise un produit de formule (I) dans laquelle R est un radical alkyle comprenant de 4 à 10 atomes de carbone, n et n' sont chacun supérieur ou égal à 1 et inférieur ou égal à 4, et p est un entier compris entre 0 et 20.

3. Agent de vulcanisation selon l'une des revendications 1 ou 2, **caractérisé en ce que** l'on utilise un composé de formule (II) dans laquelle R' et R" représentent un radical alkyle comprenant de 1 à 3 atomes de carbone.

4. Agent de vulcanisation selon l'une des revendications 1 ou 2, **caractérisé en ce que** le composé II est l'urée.

5. Agent de vulcanisation selon l'une des revendications 1 à 4, **caractérisé en ce que** l'on utilise un mélange de composés de formule (I) dans laquelle R est un radical alkyle comprenant au moins un carbone tertiaire par lequel R est relié au noyau aromatique.

6. Agent de vulcanisation selon la revendication 5, **caractérisé en ce que** R est un radical tertio-butyle ou tertio-pentyle.

7. Agent de vulcanisation selon la revendication 6, **caractérisé en ce que** le mélange de composés de formule (I) est tel que la valeur moyenne de n et de n' est d'environ 2, et la valeur moyenne de p est d'environ 5.

8. Procédé de vulcanisation d'une composition élastomérique de type EPDM ne présentant pas de risque relatif aux nitrosamines, comprenant l'incorporation dans la composition élastomérique vulcanisable d'une quantité efficace de l'agent de vulcanisation selon l'une des revendications 1 à 7.

9. Procédé de vulcanisation selon la revendication 8, **caractérisé en ce que** la composition élastomérique incorpore comme élastomère un ou plusieurs terpolymères d'éthylène, de propylène et d'éthylidène norbornène.

10. Procédé de vulcanisation selon l'une des revendications 8 ou 9, **caractérisé en ce que** la quantité efficace d'agent de vulcanisation est comprise entre 0,4 et 6 parties en poids pour 100 parties en poids d'élastomère, de préférence entre 0,8 et 3.

## Claims

1. A sulfur-donor vulcanizing agent comprising the combination of:
- 10 to 90% of a product (I) consisting of a mixture of poly(alkylphenol) polysulfides of formula: 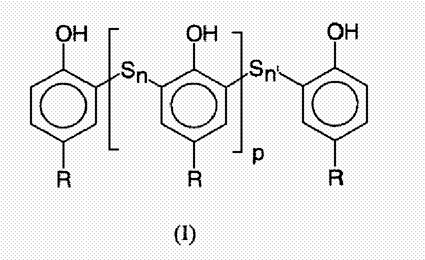 in which:
- R is an alkyl radical having 1 to 20 carbon atoms,
- n and n' are two integers that are identical or different, each being greater than or equal to 1 and less than or equal to 8,
- p is an integer between 0 and 50, and
- from 10 to 90% of a compound of formula (II)
R'NHCONHR" (II)
in which R' and R" that are identical or different, each represent a hydrogen atom or an alkyl or aryl radical having 1 to 20 carbon atoms.

2. The vulcanizing agent as claimed in claim 1, **characterized in that** a product of formula (I) is used in which R is an alkyl radical having 4 to 10 carbon atoms, n and n' are each greater than or equal to 1 and less than or equal to 4, and p is an integer between 0 and 20.

3. The vulcanizing agent as claimed in either of claims 1 or 2, **characterized in that** a compound of formula (II) is used in which R' and R" represent an alkyl radical having 1 to 3 carbon atoms.

4. The vulcanizing agent as claimed in either of claims 1 or 2, **characterized in that** the compound II is urea.

5. The vulcanizing agent as claimed in one of claims 1 to 4, **characterized in that** a mixture is used of compounds of formula (I) in which R is an alkyl radical having at least one tertiary carbon by which R is linked to the aromatic nucleus.

6. The vulcanizing agent as claimed in claim 5, **characterized in that** R is a tertio-butyl or tertiopentyl radical.

7. The vulcanizing agent as claimed in claim 6, **characterized in that** the mixture of compounds of formula (I) is such that the average value of n and n' is approximately 2, and the average value of p is approximately 5.

8. A method for vulcanizing an elastomeric composition of the EPDM type presenting no risk relative to nitrosamines, comprising the incorporation of an effective quantity of the vulcanizing agent as claimed in one of claims 1 to 7 in the vulcanizable elastomeric composition.

9. The vulcanization method as claimed in claim 8, **characterized in that** the elastomeric composition incorporates as an elastomer one or more terpolymers of ethylene, propylene and ethylidene norbornene.

10. The vulcanization method as claimed in either of claims 8 or 9, **characterized in that** the effective quantity of vulcanizing agent is between 0.4 and 6 parts by weight, preferably between 0.8 and 3 parts by weight, per 100 parts by weight of elastomer.

## Patentansprüche

1. Vulkanisationsmittel, welches als Schwefelquelle dient und die Kombination folgender Bestandteile umfasst:
- 10 bis 90 % eines Stoffes (I), der aus einer Mischung aus Poly(alkylphenol)polysulfiden nach folgender Formel besteht: 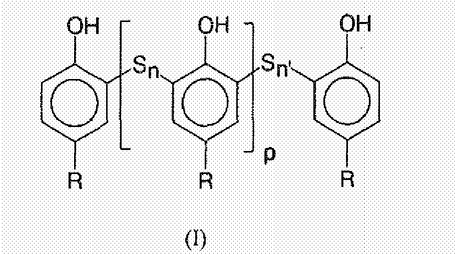 wobei:
- es sich bei R um ein Alkylradikal handelt, welches 1 bis 20 Kohlenstoffatome umfasst,
- es sich bei n und n' um zwei ganze Zahlen handelt, die vollkommen gleichartig oder verschiedenartig sind und die jeweils größer oder gleich 1 und kleiner oder gleich 8 sind,
- es sich bei p um eine ganze Zahl zwischen 0 und 50 handelt, sowie
- von 10 bis 90 % einer Verbindung nach Formel (II)
R'NHCONHR" (II)
wobei R'und R", die vollkommen gleichartig oder verschiedenartig sind, jeweils für ein Wasserstoffatom oder für ein Alkyl- oder Arylradikal, welches 1 bis 20 Kohlenstoffatome umfasst, stehen.

2. Vulkanisationsmittel gemäß Anspruch 1, **dadurch gekennzeichnet, dass** ein Stoff nach Formel (I) verwendet wird, wobei es sich bei R um ein Alkylradikal, das 4 bis 10 Kohlenstoffatome umfasst, handelt, n und n' jeweils größer oder gleich 1 und kleiner oder gleich 4 sind und es sich bei p um eine ganze Zahl zwischen 0 und 20 handelt.

3. Vulkanisationsmittel gemäß einem der Ansprüche 1 oder 2, **dadurch gekennzeichnet, dass** eine Verbindung nach Formel (II) verwendet wird, wobei R' und R" für ein Alkylradikal, welches 1 bis 3 Kohlenstoffatome umfasst, stehen.

4. Vulkanisationsmittel gemäß einem der Ansprüche 1 oder 2, **dadurch gekennzeichnet, dass** es sich bei der Verbindung II um Harnstoff handelt.

5. Vulkanisationsmittel gemäß einem der Ansprüche 1 bis 4, **dadurch gekennzeichnet, dass** eine Mischung aus Verbindungen nach Formel (I) verwendet wird, wobei es sich bei R um ein Alkylradikal handelt, das mindestens ein tertiäres Kohlenstoffatom umfasst, über welches R mit dem Aromatenkern verbunden ist.

6. Vulkanisationsmittel gemäß Anspruch 5, **dadurch gekennzeichnet, dass** es sich bei R um ein tertiär-Butyl- oder ein tertiär-Pentylradikal handelt.

7. Vulkanisationsmittel gemäß Anspruch 6, **dadurch gekennzeichnet, dass** die Mischung aus Verbindungen nach Formel (I) derart beschaffen ist, dass die Mittelwerte von n und von n' ungefähr 2 betragen und der Mittelwert von p ungefähr 5 beträgt.

8. Verfahren zur Vulkanisation einer Elastomerzusammensetzung des Typs EPDM, welches mit Bezug auf Nitrosamine ohne Risiko ist und bei welchem eine wirksame Menge des Vulkanisationsmittels gemäß einem der Ansprüche 1 bis 7 der vulkanisierbaren Elastomerzusammensetzung zugesetzt wird.

9. Vulkanisationsverfahren gemäß Anspruch 8, **dadurch gekennzeichnet, dass** die Elastomerzusammensetzung als Elastomer ein oder mehrere Terpolymer(e) aus Ethylen, Propylen und Ethylidennorbornen umfasst.

10. Vulkanisationsverfahren gemäß einem der Ansprüche 8 oder 9, **dadurch gekennzeichnet, dass** die wirksame Menge an Vulkanisationsmittel zwischen 0,4 und 6 Gewichtsteile auf 100 Gewichtsteile Elastomer beträgt, vorzugsweise zwischen 0,8 und 3.
